Europäisches Patentamt

European Patent Office

Office européen des brevets

(11) Veröffentlichungsnummer: **0 307 634**
**A1**

## EUROPÄISCHE PATENTANMELDUNG

(21) Anmeldenummer: **88113243.5**

(22) Anmeldetag: **16.08.88**

(51) Int. Cl.4: **G01M 17/00** , //F16D66/00, **G01G19/12**

(30) Priorität: **10.09.87 DE 8712263 U**

(43) Veröffentlichungstag der Anmeldung:
**22.03.89 Patentblatt 89/12**

(84) Benannte Vertragsstaaten:
**DE ES FR GB IT SE**

(71) Anmelder: **Bergische Achsenfabrik Fr. Kotz & Söhne**
**Am Ohlerhammer**
**D-5276 Wiehl 1(DE)**

(72) Erfinder: **Krell, Jürgen, Dipl.-Ing.**
**Horst-Köhler-Strasse 31**
**D-5276 Wiehl(DE)**
Erfinder: **Steiner, Helmut**
**Freiherr-vom-Stein-Strasse 1**
**D-5276 Wiehl(DE)**
Erfinder: **Paech, Hartmut**
**Stettiner-Strasse 1**
**D-5220 Waldbröl-Hermesdorf(DE)**

(74) Vertreter: **Patentanwälte Dipl.-Ing. Alex Stenger Dipl.-Ing. Wolfram Watzke Dipl.-Ing. Heinz J. Ring**
**Kaiser-Friedrich-Ring 70**
**D-4000 Düsseldorf 11(DE)**

(54) **Vorrichtung und Achskörper zum Messen, Aufzeichnen und Anzeigen wichtiger Betriebsdaten einer Anhängerachse.**

(57) Gegenstand der Erfindung sind eine Vorrichtung und ein Achskörper zum Messen, Auszeichnen und Anzeigen wichtiger Betriebsdaten einer Anhängerachse (1) mit einem hohlen Achskörper (2), Achsschenkeln (15) mit Lagersitzen für Radlager (3,4) und Trommelbremsen. Zur kontinuierlichen Überwachung aller wichtigen Betriebsdaten der Anhängerachse wird vorgeschlagen, am Achskörper (2) auf beiden Seiten zwischen Federauflage (7) und Bremsbrücken (8) Lastsensoren (13) in den Achsschenkeln (15), an den Lagersitzen Temperatursensoren (13) und in den Bremsbelägen (5) beider Trommelbremsen kombinierte Temperatur- und Verschleißsensoren (17) anzuordnen. Die ermittelten Meßdaten werden über Kabel an ein Achsinterface (10) und von diesem an einen Datenspeicher (11) und eine Anzeige (12) im Führerhaus des Zugfahrzeuges weitergegeben.

Fig.1

# Vorrichtung und Achskörper zum Messen, Aufzeichnen und Anzeigen wichtiger Betriebsdaten einer Anhängerachse

Gegenstand der Erfindung sind eine Vorrichtung und ein Achskörper zum Messen, Aufzeichnen und Anzeigen wichtiger Betriebsdaten einer Anhängerachse mit einem hohlen Achskörper, Achsschenkeln mit Lagersitzen für die Radlager und Trommelbremsen.

Eine systematische Überwachung der Betriebsdaten von Anhängerachsen über die gesamte Betriebsdauer findet zur Zeit nicht statt. Aus der DE-OS 27 32 676 ist es lediglich bekannt, den Bremsbelagverschleiß mit einem Sensor abzufühlen, der aus einem Schraubbolzen besteht. Dieser Sensor kann aber auch nur den Verschleißzustand des Bremsbelages melden und gibt keine Auskunft über den ebenfalls sehr wichtigen Temperaturverlauf während einer Betriebsfahrt und der dabei auftretenden Bremsvorgänge. Über diesen Stand der Technik hinaus besteht ein dringendes Bedürfnis, alle wesentlichen Betriebsdaten einer Anhängerachse laufend zu messen, aufzuzeichnen und auch im Zugfahrzeug anzuzeigen, damit Schwachstellen möglichst schon während einer Betriebsfahrt erkannt und behoben, spätestens aber anlässlich der normalen Wartungsarbeiten gründlich untersucht und behoben werden können. Außerdem führt eine laufende Überwachung aller wesentlichen Betriebsdaten der Anhängerachse zu einer Optimierung der Wartungsintervalle und ermöglicht detaillierte Kenntnisse über die Ursachen von Betriebskosten.

Davon ausgehend liegt der Erfindung die **Aufgabe** zugrunde, eine Vorrichtung und einen Achskörper zu schaffen, mit denen wichtige Betriebsdaten einer Anhängerachse ermittelt, gespeichert und einer optischen und/oder akustischen Anzeige übertragen werden können.

Als technische **Lösung** wird dafür folgende **Vorrichtung** vorgeschlagen:

a) am Achskörper sind auf beiden Seiten zwischen Federauflage und Bremsbrücke Lastsensoren,

b) in den Achsschenkeln sind an den Lagersitzen Temperatursensoren,

c) in den Bremsbelägen beider Trommelbremsen sind kombinierte Temperatur- und Verschleißsensoren angeordnet und

d) die ermittelten Meßdaten werden über in dem Achskörper verlegte Kabel zu einem etwa in der Mitte angeordneten Achsinterface übertragen und von dort an einen Datenspeicher sowie eine optische und/oder akustische Anzeigetafel im Führerhaus des Zugfahrzeuges weitergeleitet.

Eine nach dieser technischen Lehre ausgebildete Vorrichtung hat den **Vorteil**, daß während der Betriebsfahrten laufend die wichtigen Betriebsdaten, nämlich die Achslast, die Lagertemperaturen, die Bremsbelagtemperaturen und der Bremsbelagverschleiß ermittelt, aufgezeichnet und optisch oder akustisch angezeigt werden können. Die gespeicherten Betriebsdaten können nach einer Betriebsfahrt ausgewertet werden, während die optische und/oder akustische Anzeige im Führerhaus des Zugfahrzeuges dem Fahrer bei kritischen Situation Warnsignale vermittelt. Die Erfindung leistet damit gleichzeitig auch einen wichtigen Beitrag zur Verkehrssicherheit.

Bei einer praktischen Ausführungsform eines Achskörpers mit einer erfindungsgemäß ausgebildeten Vorrichtung können die Last-und Temperatursensoren in waagerecht verlaufenden Bohrungen angeordnet sein, um Fehlerquellen bei der Messung möglichst auszuschließen. Die Bohrungen für die Temperatursensoren in den Achsschenkeln sollten zur Erleichterung der Montage unter einem spitzen Winkel von 40 bis 70°, vorzugsweise 55° zur Längsachse des Achskörpers verlaufen.

Die Temperatur- und Verschleißsensoren zur Überwachung der Bremsbeläge werden zweckmäßig in einer Nietbohrung von Bremsbelag und Bremsbacke angeordnet. Damit die Bremsbacken auch weiterhin zum Austausch abgenutzter Bremsbeläge demontiert werden können, wird vorgeschlagen, am Achskörper eine Steckverbindung für das Kabel des Temperatur- und Verschleißsensors vorzusehen.

Etwa in der Mitte des Achskörpers werden die Kabel aller Sensoren zweckmäßig durch eine ebenfalls waagerecht verlaufende Bohrung herausgeführt und in einem Achsinterface zusammengefasst, welches die empfangenen Signale auf elektronischem Wege aufbereitet und an einen Datenspeicher sowie die optische und/oder akustische Anzeige im Führerhaus des Zugfahrzeuges weiterleitet.

Weitere Einzelheiten und Vorteile ergeben sich aus der nachfolgenden Beschreibung der zugehörigen Zeichnungen, in denen eine Vorrichtung und ein Achskörper schematisch dargestellt worden sind. In den Zeichnungen zeigen:

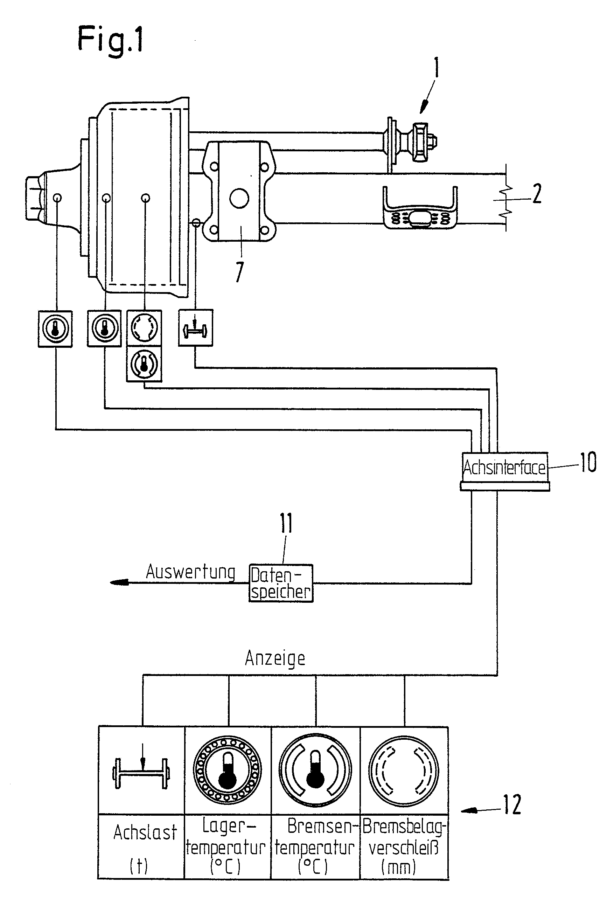

Fig. 1 ein Schema der Signalermittlung und -verarbeitung in Verbindung mit einer symbolischen Signaldarstellung;

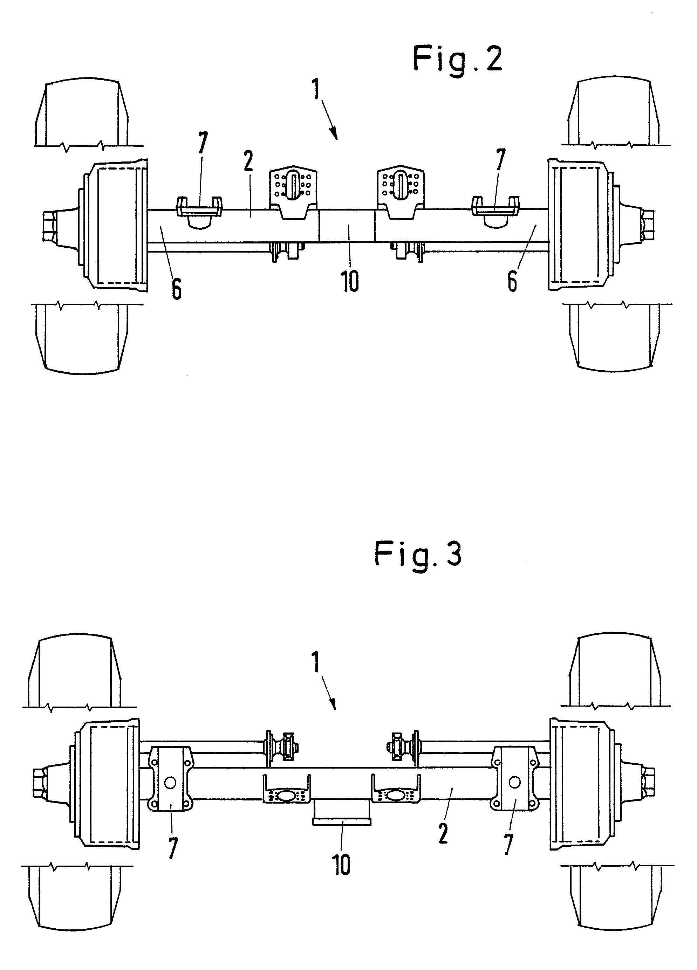

Fig. 2 eine Anhängerachse von hinten gesehen;

Fig. 3 dieselbe Anhängerachse in Draufsicht;

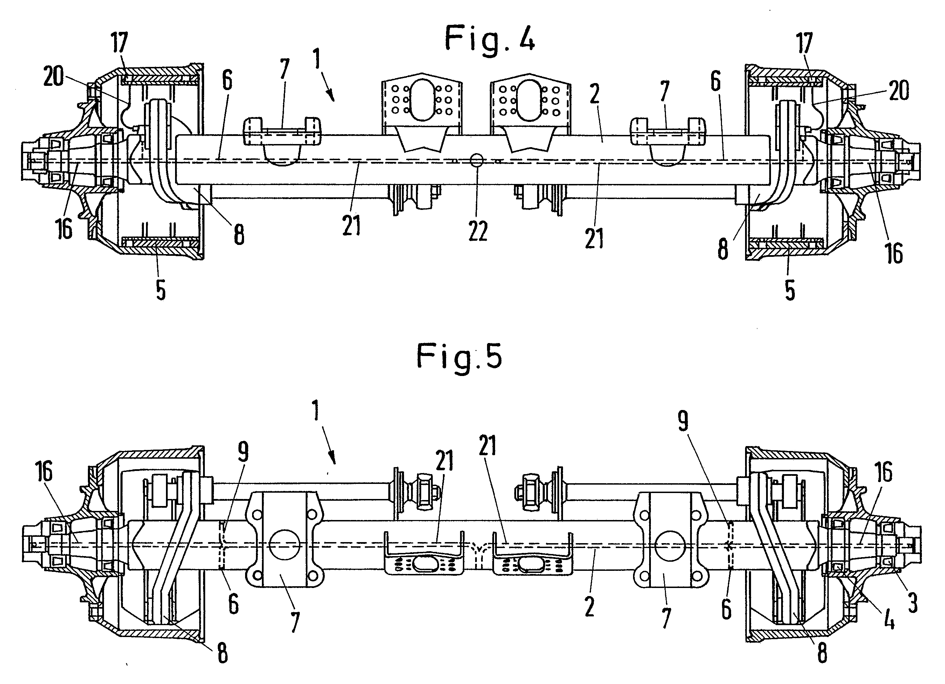

Fig. 4 eine Anhängerachse mit geschnittenen Bremstrommeln in Ansicht von hinten;

Fig. 5 dieselbe Anhängerachse gemäß Fig. 4 in Draufsicht;

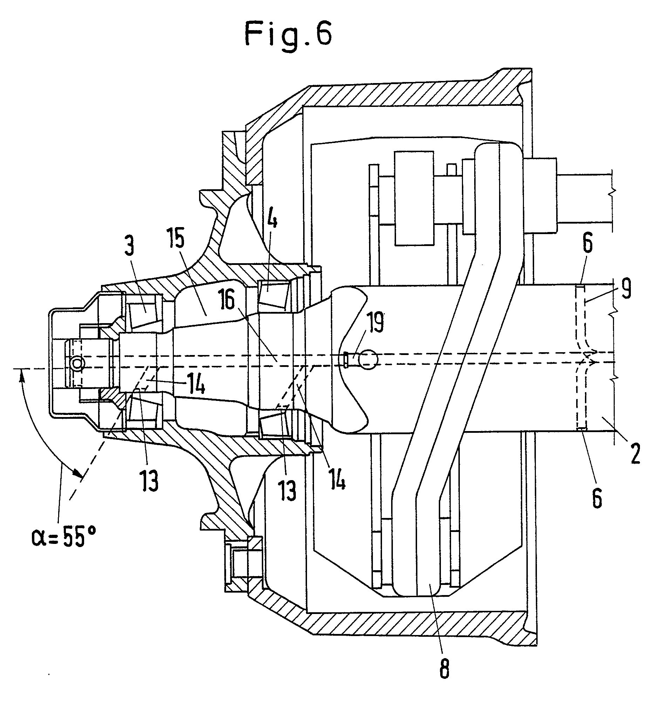

Fig. 6 eine Bremstrommel in vergrößerter Darstellung geschnitten und in Draufsicht;

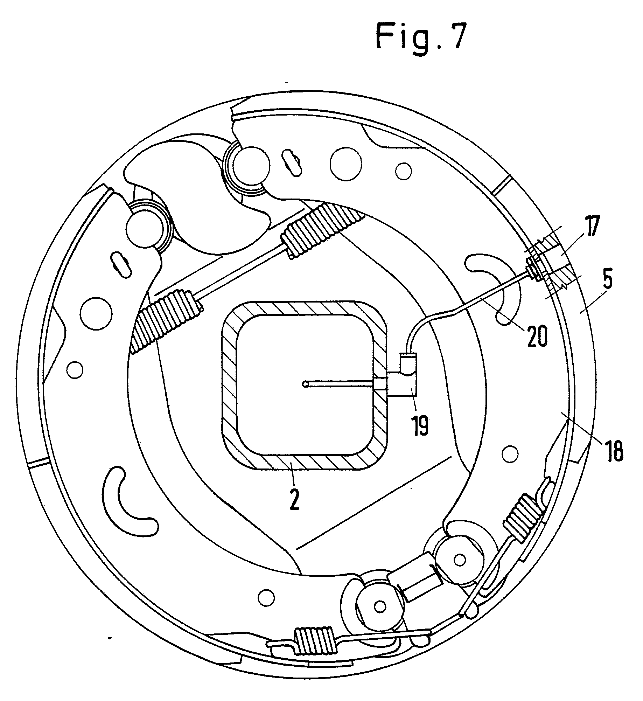

Fig. 7 eine Bremsbackenanordnung von der Innenseite her gesehen.

An einer Anhängerachse 1 interessieren insbesondere die auf einen Achskörper 2 einwirkende Achslast, die Temperaturen von Radlagern 3,4 und die Temperatur sowie der Verschleiß von Bremsbelägen 5.

Die Achslast wird mit Lastsensoren 6 ermittelt, die auf beiden Seiten zwischen Federauflagen 7 und Bremsbrücken 8 in einer neutralen Zone des Achskörpers 2 in waagerechten Bohrungen 9 angeordnet sind. Bei der Konstruktion und Anordnung der Lastsensoren 6 ist darauf zu achten, daß die aus Biegung und Torsion zusammengesetzten Beanspruchungen des Achskörpers 2 keine Fehldaten erzeugen. Durch eine elektronische Auswertung der Meßdaten in einem Achsinterface 10 wird die statische und dynamische Achslast herausgefiltert und an einen Datenspeicher 11 sowie eine optische und akustische Anzeige 12 im Führerhaus weitergegeben.

Die Temperatur der Radlager 3 und 4 wird mit Temperatursensoren 13 gemessen, die in waagerechten Bohrungen 14 Achsschenkeln 15 im Bereich der Lagersitze der Radlager 3,4 angeordnet sind. Die waagerechten Bohrungen 14 gehen von zentralen Bohrungen 16 in den Achsschenkeln 15 aus und sind unter einem spitzen Winkel von 55° zur Längsachse des Achskörpers angeordnet, um die Montage der Temperatursensoren 13 bzw. der mit diesen verbundenen Kabel zu erleichtern.

Die Bremsbeläge 5 werden mit Temperatur- und Verschleißsensoren 17 überwacht, die in einer Nietbohrung von Bremsbelag 5 und Bremsbacke 18 angeordnet sind. Da die Bremsbacken 18 für eine Erneuerung der Bremsbeläge 5 austauschbar bleiben müssen, sind am Achskörper 2 Steckverbindungen 19 für mit den Temperatur- und Verschleißsensoren 17 verbundene Kabel 20 vorgesehen.

Die von den Lastsensoren 6, Temperatursensoren 13 und Temperatur- und Verschleißsensoren 17 ermittelten Meßdaten werden über Kabel 21 durch eine etwa in der Mitte des Achskörpers 2 angeordnete, waagerechte Bohrung 22 an das am Achskörper 2 befestigte Achsinterface 10 übertragen, indem eine elektronische Aufbereitung der Meßdaten erfolgt, um für die Auswertung geeignete Signale an den Datenspeicher 11 und die Anzeige 12 im Führerhaus weitergeben zu können.

## Bezugzeichenliste

1 Anhängerachse
2 Achskörper
3 Radlager
4 Radlager
5 Bremsbelag
6 Lastsensor
7 Federauflage
8 Bremsbrücke
9 Bohrung
10 Achsinterface
11 Datenspeicher
12 Anzeige
13 Temperatursensor
14 Bohrung
15 Achsschenkel
16 Bohrung
17 Temperatur- und Verschleißsensor
18 Bremsbacke
19 Steckverbindung
20 Kabel
21 Kabel
22 Bohrung

## Ansprüche

1. Vorrichtung zum Messen, Aufzeichnen und Anzeigen wichtiger Betriebsdaten einer Anhängerachse mit einem hohlen Achskörper (2). Achsschenkeln (15) mit Lagersitzen für Radlager (3.4) und Trommelbremsen,
**dadurch gekennzeichnet,**
daß am Achskörper (2) auf beiden Seiten zwischen Federauflage (7) und Bremsbrücke (8) Lastsensoren (6),
daß in den Achsschenkeln (15) an den Lagersitzen Temperatursensoren (13),
daß in den Bremsbelägen (5) beider Trommelbremsen kombinierte Temperatur- und Verschleißsensonren (17) angeordnet sind und
daß die Meßdaten über in dem Achskörper (2) verlegte Kabel (21) zu einem etwa in der Mitte angeordneten Achsinterface (10) übertragen und von dort an einem Datenspeicher (11) sowie eine optische und/oder akustische Anzeige (12) im Führerhaus des Zugfahrzeuges weitergeleitet werden.

2. Achskörper für eine Vorrichtung gemäß Anspruch 1, dadurch gekennzeichnet, daß die Lastsensoren (6) an waagerecht verlaufenden Bohrungen (9) des Achskörpers (2) angeordnet sind.

3. Achskörper für eine Vorrichtung gemäß Anspruch 1, dadurch gekennzeichnet, daß die Temperatursensoren (13) in waagerecht verlaufenden Bohrungen (14) der Achsschenkel (15) angeordnet sind, die im Bereich der Lagersitze für die Radlager (3,4) münden.

4. Achskörper nach Anspruch 3, dadurch gekennzeichnet, daß die Bohrungen unter einem spitzen Winkel von 40 bis 70°, vorzugsweise 55° zur Längsachse des Achskörpers (2) verlaufen.

5. Achskörper für eine Vorrichtung gemäß Anspruch 1, dadurch gekennzeichnet, daß die Temperatur- und Verschleißsensoren (17) in einer Nietbohrung von Bremsbelag (5) und Bremsbacke (18) angeordnet sind.

6. Achskörper nach Anspruch 5, dadurch gekennzeichnet, daß am Achskörper (2) eine Steckverbindung (19) für ein Kabel (20) des Temperatur- und Verschleißsensors (17) vorgesehen ist.

7. Achskörper für eine Vorrichtung nach Anspruch 1, dadurch gekennzeichnet, daß etwa in der Mitte eine waagerecht verlaufende Bohrung (22) für die Kabeldurchführung zum Achsinterface (10) vorgesehen ist.

8. Achskörper für eine Vorrichtung gemäß Anspruch 1, dadurch gekennzeichnet, daß die Achsschenkel (15) mit einer zentralen, im hohlen Achskörper (2) mündenden Bohrung (16) versehen sind, von der die Bohrungen (14) für die Temperatursensoren (13) ausgehen.

# Fig.1

Achsinterface — 10

11

Auswertung ← Daten-speicher

Anzeige

| Achslast (t) | Lager-temperatur (°C) | Bremsen-temperatur (°C) | Bremsbelag-verschleiß (mm) |
|---|---|---|---|

12

EP 0 307 634 A1

## Fig. 2

## Fig. 3

Fig. 4

Fig. 5

Fig.6

# Fig. 7

| EINSCHLÄGIGE DOKUMENTE | | | EP 88113243.5 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
| A | DE - A1 - 3 319 988 (MATSUSHITA)<br>* Zusammenfassung; Fig. *<br>-- | 1 | G 01 M 17/00<br>//F 16 D 66/00<br>G 01 G 19/12 |
| D,A | DE - A1 - 2 732 676 (ROCKWELL)<br>* Fig. *<br>-- | 1 | |
| A | GB - A - 2 178 178 (SECRETARY)<br>* Zusammenfassung; Fig. 1 *<br>-- | 1 | |
| A | DE - A1 - 3 531 245 (BOSCH)<br>* Fig. 1,3 *<br>---- | 1,2 | |

RECHERCHIERTE SACHGEBIETE (Int. Cl.4)

G 01 M 17/00

F 16 D 66/00

G 01 G 19/00

Der vorliegende Recherchenbericht wurde für alle Patentansprüche erstellt.

| Recherchenort | Abschlußdatum der Recherche | Prüfer |
|---|---|---|
| WIEN | 22-12-1988 | BURGHARDT |

EPA Form 1503 03 82